# EUROPÄISCHE PATENTANMELDUNG

(11) **EP 0 824 226 A1**
(43) Veröffentlichungstag der Anmeldung: **18.02.1998**
(21) Anmeldenummer: 97113918.3
(22) Anmeldetag: 12.08.1997
(51) Int. Cl.: G03G 9/087, C08F 110/06

(54) **Toner für die Entwicklung elektrostatischer Bilder, enthaltend wenigstens ein zumindest teilweise taktisches Polyalkylenenwachs**

(30) Priorität: 12.08.1996 DE 19632480
(71) Anmelder: BASF AKTIENGESELLSCHAFT, 67056 Ludwigshafen (DE)
(72) Erfinder: Czech, Erwin, Dr., 68647 Biblis (DE)
(74) Vertreter: Kinzebach, Werner, Dr.

(57) **Zusammenfassung**

Die vorliegende Erfindung betrifft Toner für die Entwicklung elektrostatischer Bilder, die wenigstens ein zumindest teilweise taktisches Polyalkylenwachs mit einer Kugeldruckhärte von mindestens 800 bar enthalten sowie die Verwendung solcher Polyalkylenwachse in Tonern.

## Beschreibung

Die vorliegende Erfindung betrifft Toner für die Entwicklung elektrostatischer Bilder, die wenigstens ein zumindest teilweise taktisches Polyalkylenwachs enthalten.

Toner für die Entwicklung von elektrostatisch erzeugten Bildern, die z.B. in Kopierern und Laserdruckern verwendet werden, müssen über besondere anwendungstechnische Eigenschaften verfügen. Beim sogenannten Trockenentwicklungsprozess erfolgt die Fixierung des Bildes im allgemeinen durch Druckkontakterwärmen mittels einer Heizwalze, wobei ein dem Toner beigemischtes natürliches oder synthetisches Harz, das auf ein Empfangsmedium, wie z.B. ein Blatt Papier übertragene Bild durch Schmelzen fixiert. Ein dem Fachmann bekanntes Problem bei der Heizwalzenfixierung ist das sogenannte "Offset-Phänomen". Es tritt auf, wenn ein Teil des Tonerbildes auf der Fixierwalz zurückbleibt und dann auf die Oberfläche eines nachfolgenden Blattes übertragen wird.

Ein erster Ansatz zur Lösung des Offset-Phänomens bestand darin, die Oberfläche der Walze konstant mit einer Offset-verhindernden Flüssigkeit zu überziehen. Diese Verfahren erfordern jedoch einen großen apparativen Aufwand und liefern nicht immer stabile Reproduktionsergebnisse.

Aus dem Stand der Technik sind Verfahren zur Herstellung und Verwendung von Tonern bekannt, die eine Komponentenmischung enthalten, die die Heizwalzenfixierung von elektrostatisch erzeugten Bildern ohne den Zusatz einer Offset-Verhinderungsflüssigkeit ermöglichen.

Die DE-A-23 52 604, die US-A-5,004,666 und die US-A-5,023,158 beschreiben Toner und ihre Verwendung für die Entwicklung elektrostatischer Bilder, die ein Färbemittel, ein Styrolharz, mindestens eine Polyalkylenverbindung aus der Gruppe Polyethylen oder Polypropylen sowie vorzugsweise zusätzlich ein Paraffinwachs und gegebenenfalls ein Fettsäuremetallsalz enthalten. Bei dem Styrolharz handelt es sich vorzugsweise um ein Homopolymer oder ein Copolymer mit mindestens einem Acrylmonomer. Die Polyalkylenverbindung ist vorzugsweise Polypropylen mit einem Zahlenmittel des Molekulargewichts von 2000 bis 6000, insbesondere 3000 bis 4000 und sie ist in einer Menge von 0,02 bis 40 Gew.-Teilen, bezogen auf 100 Gew.-Teile Styrolharz enthalten. Da ein alleiniger Zusatz von Polypropylen zu Agglomerationsproblemen führen kann, enthalten die vorbeschriebenen Toner weiterhin ein Paraffinwachs, vorzugsweise einen natürlichen oder synthetischen Paraffinkohlenwasserstoff mit etwa 15 bis 40 Kohlenstoffatomen und einem Schmelzpunkt von etwa 37 bis 65°C. Die Gesamtmenge der Mischung aus Polypropylenwachs und Paraffinwachs beträgt 0,1 bis 50 Gew.-Teile, bezogen auf 100 Gew.-Teile Styrolharz. Des weiteren beschreiben die obengenannten Patentschriften noch den Zusatz von Fettsäuremetallsalzen in einer Menge von 0,1 bis 10 Gew.-Teilen, bezogen auf 100 Teile Harzkomponente.

Die EP-B-0 563 834 beschreibt ein syndiotaktisches Polypropylenwachs mit einer mittels ¹³C-NMR ermittelten syndiotaktischen Pentade (rrrr) von 0,7, einem Schmelzpunkt im Bereich von 120 bis 170°C, einer intrinsischen Viskositätszahl ([η]) im Bereich von 0,01 bis 0,4 dl/g, gemessen bei 135°C an einer Tetralinlösung und einer Schmelzenthalpie (ΔHₘ) im Bereich von 5 bis 20 cal/g. Dieses Wachs wird hergestellt durch Ziegler-Natta-Polymerisation von Propylen mit anschliessendem thermischen Abbau, wobei man Wachse mit einem geringeren Molekulargewicht erhält und in Toner für die Heizwalzenfixierung, die als Komponente ein solches syndiotaktisches Polypropylenwachs enthalten, verwendet. Als besonders vorteilhaft für die Heizwalzenfixierung wird der relativ hohe Schmelzpunkt des Wachses bei einer gleichzeitig relativ geringen Schmelzenthalpie herausgestellt, wodurch die Herstellung von Tonern mit hoher Offset-Resistenz möglich wird. Auf die mechanischen Eigenschaften des Polypropylenwachses und der dieses enthaltenden Toner geht die Schrift nicht ein.

Zur Herstellung moderner Tonerformulierungen mit kleinen Teilchengrößen von etwa 5 bis 25 µm und speziell zur Herstellung von Mikrotonern mit mittleren Teilchengrößen von 5 bis 10 µm, müssen die Toner gemahlen werden. Übliche Mahlaggregate sind z.B. Fließbettgegenstrahlmühlen, in denen das Mahlgut durch den Zusammenprall der Teilchen untereinander zerkleinert wird. Dem Fachmann ist bekannt, daß niedermolekulare Polyalkylenwachse aufgrund ihrer rheologischen Eigenschaften die Mahlbarkeit des Toners deutlich verschlechtern.

Die mechanischen Eigenschaften von Polymeren und insbesondere ihr energieelastisches, entropieelastisches und viskoelastisches Verhalten kann durch einen Satz von unterschiedlichen Elastizitäts- und Verlustmoduln beschrieben werden. Allgemein wird bei Polymeren mit hohem Elastizitätsanteil nach einer Krafteinwirkung die aufgenommene Energie ohne große Wärmeverluste in Form von kinetischer oder Lageenergie wieder abgegeben. Polymere mit einem hohen Verlustanteil dagegen reagieren auf eine einwirkende Kraft durch Verformung der äusseren Gestalt und Wärmebildung.

Für die Verwendung in Tonern für die Heizwalzenfixierung müssen Polyalkylenwachse in ihren Materialeigenschaften ein ausgewogenes Verhältnis von Elastizitätsmoduln zu Verlustmoduln aufweisen, damit der Toner einerseits ein möglichst breites Thermofixierfenster mit hoher Klebrigkeit aufweist (hohes Verlustmodul), andererseits aber noch ausreichend spröde ist, um die beim Mahlen auftretenden Scherkräfte nicht überwiegend in Verformungs- und Wärmeenergie umzusetzen und somit zu verkleben.

Die aus dem Stand der Technik bekannten Tonerzusammensetzungen zeigen aufgrund ihrer rheologischen Eigenschaften infolge der zugesetzten Polyalkylenwachse eine schlechte Mahlbarkeit, so daß die z.B. in Gegenstrahlmühlen erreichten Mahlkapazitäten deutlich verbesserungswürdig sind.

Aufgabe der vorliegenden Erfindung war es daher, Toner zur Verfügung zu stellen, die ein verbessertes Mahlverhalten bei ansonsten im wesentlichen unveränderten physikalischen Eigenschaften aufweisen.

Überraschenderweise wurde nun gefunden, daß die Aufgabe gelöst wird, wenn die Toner wenigstens ein zumindest teilweise taktisches Polyalkylenwachs mit einer Kugeldruckhärte von mindestens 800 bar enthalten.

Gegenstand der Erfindung sind daher Toner für die Entwicklung elektrostatischer Bilder, enthaltend
a) 10 bis 95 Gew.-% mindestens eines Binderharzes
b) 0,01 bis 40 Gew.-% wenigstens eines zumindest teilweise taktischen Polyalkylenwachses mit einem Zahlenmittel des Molekulargewichts von 2000 bis 12000 und einer Kugeldruckhärte von mindestens 800 bar, und
c) 0,1 bis 10 Gew.-% eines Färbemittels,
   sowie gegebenenfalls weitere Inhaltsstoffe.

### Komponente a)

Geeignete Binderharze für Tonerformulierungen sind dem Fachmann bekannt und z.B. in der DE-A-23 52 604, US-A-5,004,666 und US-A-5,023,158 beschrieben, wobei es sich um Homo- oder Copolymerisate handeln kann.

Geeignete Monomere für Homopolymerisate sind z.B. Styrol, Ester der Acrylsäure sowie Ester der Methacrylsäure. Geeignete Copolymerisate sind Styrol-Copolymere mit mindestens einem Comonomer, z.B. ethylenisch ungesättigten Monoolefinen, wie z.B. Ethylen, Propylen, Buten und Isobuten, Vinylhalogeniden, Vinylestern wie z.B. Vinylformiat, Vinylacetat, Vinylpropionat und Vinylbenzoat, Estern der Acrylsäure und der Methacrylsäure, wie z.B. Methylacrylat, Ethylacrylat, n-Butylacryl, iso-Butylacrylat, Ethylhexylacrylat, Octylacrylat, Dodecylacrylat, Phenylacrylat, 2-Chlorethylacrylat, Methylmethacrylat, Ethylmethacrylat, Butylmethacrylat, Ethylhexylmethacrylat und Methyl-α-chloracrylat, ethylenisch ungesättigten Nitrilen, wie z.B. Acrylnitril und Methacrylnitril, Vinylethern, wie z.B. Vinylmethylether, Vinylisobutylether und Vinylethylether, Vinylketonen, wie z.B. Vinylmethylketon, Vinylhexylketon und Methylisopropenylketon, N-Vinylverbindungen, wie z.B. N-Vinylpyrrol, N-Vinylcarbazol, N-Vinylindol, N-Vinylpyrrolidon, N-Vinylimidazol und N-Vinylimidazolin oder deren Mischungen.

Geeignete Binderharze sind vorteilhaft bei Raumtemperatur fest und erweichen bereits bei geringem Erwärmen, so daß im allgemeinen Polymerharze mit Glasübergangstemperaturen T_{g} im Bereich von etwa 40 bis etwa 90°C geeignet sind. Werden Styrolharze verwendet, so haben diese im allgemeinen ein durchschnittliches Zahlenmittel des Molekulargewichts von etwa 2000 bis 4000 und einen Styrolgehalt von vorzugsweise mindestens 20 Gew.-%, bezogen auf das Gesamtgewicht des Harzes.

Gemäß einer bevorzugten Ausführungsform der Erfindung handelt es sich bei den Binderharzen um Styrol/Alkylmethacrylat-Harze und Styrol/Alkylacrylat-Harze, wie z.B. Styrol/Butylmethacrylatharze. Diese enthalten 50 bis 90 Gew.-%, vorzugsweise 70 bis 85 Gew.-% Styrol und 10 bis 50 Gew.-%, vorzugsweise 15 bis 30 Gew.-% Butylmethacrylat.

Geeignete thermoplastische Harze können auch durch Mischen eines Styrolharzes mit einem anderen Harz hergestellt werden. Geeignete andere Harze umfassen Homo- oder Copolymere der folgenden Monomere: Vinylnaphthalin, Vinylhalogenide, die vorgenannten Vinylester, die vorgenannten Ester der Acrylsäure und der Methacrylsäure, die vorgenannten ethylenische ungesättigten Nitrile, die vorgenannten Vinylether und Vinylketone sowie die vorgenannten N-Vinylverbindungen, oder deren Mischungen.

Weiterhin für Mischungen mit Styrolharzen geeignete nichtvinylische thermoplastische Harze sind Phenol-Formaldehydharze, ölmodifizierte Epoxidharze, Polyurethanharze, Celluloseharze und andere Polyetherharze.

Um für die Heizwalzenfixierung geeignete Harzmischungen zu erhalten, die nicht an der Walze kleben, sollte der Gewichtsanteil der Styrolkomponente mindestens 25 Gew.-%, bezogen auf die Gesamtmenge der Harzmischung betragen.

### Komponente b)

Die erfindungsgemäßen Toner enthalten wenigstens ein zumindest teilweise taktisches Polyalkylenwachs in einer Menge von 0,01 bis 40 Gew.-%, bevorzugt von 0,1 bis 20 Gew-%, besonders bevorzugt von 0,5 bis 15 Gew.-% und insbesondere von 1 bis 10 Gew.-%.

Gemäß einer bevorzugten Ausführungsform handelt es sich bei der Polyalkylenverbindung um zumindest teilweise taktisches Polypropylen mit einem Zahlenmittel des Molekulargewichts Mₙ von 2000 bis 12000 (bestimmt durch Gelpermeationschromatographie). Diese Harze weisen vorteilhafterweise einen für die Schmelzfixierung geeigneten Schmelzpunkt bei guter Kompatibilität zu den vorgenannten Tonerharzen auf und verbessern die Nicht-Klebewirkung der sie enthaltenden Toner.

Die Taktizität verleiht der Komponente b) im Vergleich zu aus dem Stand der Technik bekannten nichttaktischen Polypropylenwachsen gleichen Molekulargewichts ausgezeichnete elastische Eigenschaften bei ansonsten gleichen physikalischen Eigenschaften. So ist die Kugeldruckhärte (Höppler-Härte), bestimmt mittels der Standardmethode DGF M- III 9a (Deutsche Gesellschaft für Fettwissenschaften e.V., Münster, die eine gutes Maß für die Mahlbarkeit eines Wachses darstellt, bei taktischen Polypropylenwachsen gegenüber nicht taktischen Polypropylenwachsen deutlich erhöht. Vorzugsweise ist die Kugeldruckhärte der erfindungsgemäßen Wachse gleich oder größer als 800 bar, insbesondere gleich oder größer als 1000 bar.

Gemäß einer speziellen Ausführungsform enthalten die erfindungsgemäßen Toner wenigstens ein zumindest teilweise isotaktisches Polypropylenwachs.

Gemäß einer weiteren speziellen Ausführungsform enthalten die erfindungsgemäßen Toner wenigstens ein zumindest teilweise syndiotaktisches Polypropylenwachs.

### Komponente c)

Geeignete Färbemittel c) sind Pigmente oder Farbstoffe, wie Ruße, z.B. carbon black, acetylene black und lamp black, die zur Gruppe der Phenazinfarbstoffe gehörenden Nigrosine, Safranine und Induline, Anilinblau, Mauvein, Neutralrot, Calkooilblau, Chrompigmente, wie Chromoxidgrün und Chromgelb, Ultramarinpigmente, Du-Pontölrot, Chinolingelb, Methylenblauchlorid, Phthalocyaninpigmente, Malachitgrünoxalat, Bengalrosa, oder deren Gemische. Bevorzugt wird als Färbemittel c) ein Ruß verwendet. Die Färbemittel werden den erfindungsgemäßen Tonern in einer Menge zugesetzt, die ausreicht, um bei der Entwicklung ein sichtbares Bild zu erzeugen, im allgemeinen in einer Menge von 0,1 bis 10 Gew.-%, bezogen auf die Gesamtmenge des Toners.

Die erfindungsgemäßen Toner können weiterhin ein Paraffinwachs d) in einer Menge von 0,01 bis 40, bevorzugt 0,1 bis 20 Gew.-% enthalten. Bevorzugt werden den erfindungsgemäßen Tonern natürliche oder synthetische Paraffinkohlenwasserstoffe mit etwa 15 bis etwa 40 Kohlenstoffatomen und einem Schmelzpunkt von etwa 37 bis etwa 65°C zugesetzt. Das auf das Gewicht bezogene Mischungsverhältnis von Paraffinwachs und Polyalkylenwachs liegt bei etwa 0,25:1 bis etwa 4:1. Der Zusatz einer geeigneten Menge an Paraffinwachs dient zur Verbesserung der Kompatibilität zwischen dem Styrolharz a) und dem Polyalkylenwachs b), um eine Agglomeration des Toners zu vermeiden. Gleichzeitig kann durch geeignete Variation der Mengenverhältnisse der Komponenten b) und c) der Temperaturbereich, innerhalb dessen der Toner seine Nicht-Klebewirkung aufweist, gesteuert werden. Außerdem wird die Nicht-Klebewirkung des Toners an der Heizwalze durch Verwendung einer vorgeschriebenen Kombination weiter verbessert.

Die erfindungsgemäßen Toner können weiterhin mindestens ein Fettsäuremetallsalz e) zur Verbesserung der Kompatibilität der Polyalkylenverbindung b) mit der Harzkomponente a) sowie zur Verbesserung des Dispergiervermögens des Färbemittels c), des Paraffinwachses d) sowie ggf. weiterer Inhaltsstoffe enthalten. Geeignete Verbindungen e) sind in der DE-A-23 52 604, US-A-5,004,666 und US-A-5,023,158 beschrieben und umfassen z.B. die Mg-, Ca-, Sr-, Ba-, Zn-, Cd-, Fe-, Co-, Ni-, Cu-, Pb-, Mn-Salze der Stearinsäure, Ölsäure, Palmitinsäure, Linolsäure, Ricinolsäure, Caprylsäure, Capronsäure etc. Die Fettsäuremetallsalze e) werden allgemein in einer Menge von 0,1 bis 10 Gew.-%, bezogen auf das Gewicht der Styrolharzkomponente zugesetzt.

In einer bevorzugten Ausführungsform enthalten die erfindungsgemäßen Toner zusätzlich zu den vorgenannten Komponenten 0,1 bis 10 Gew.-% mindestens eines Fließfähigkeitsverbessers f). Um die Fließfähigkeit zu verbessern und die Agglomeration von Tonern zu verhindern, werden vorzugsweise anorganische, feinpartikuläre Pulver auf der Oberfläche der Toner aufgebracht. Als anorganische, feinpartikuläre Pulver werden Metalloxide, die im Naß- oder Trockenverfahren hergestellt wurden, eingesetzt z.B. Titandioxid, Siliciumdioxid, Aluminiumoxid, Magnesiumoxid, Zinkoxid und ähnliche. Sie können einzeln oder in Kombination eingesetzt werden. Es ist bevorzugt feinpartikuläres Siliciumdioxid einzusetzen. Weiterhin kann man die Oberflächen der anorganischen Metalloxide mit Silan-Kupplungsagentien behandeln, wie z.B. in der US-A 5,501,931 beschrieben. Die Behandlung dient dazu, die hydrophilen Oberflächen der Metalloxide zu modifizieren, um den Einfluß von Luftfeuchtigkeit auf die Tonerpartikel, die unter Umständen das elektrostatische Ladungsverhalten ungünstig gestaltet, zu reduzieren. Die spezifischen Oberflächen dieser anorganischen Metalloxide sind üblicherweise 20 bis 700 m²/g, bevorzugt 50 bis 500 m²/g.

In einer weiteren bevorzugten Ausführungsform enthalten die erfindungsgemäßen Toner zusätzlich 0,1 bis 5 Gew.-% mindestens eines Ladungsstabilisators g1) oder eines Ladungskontrollmittels g2). Geeignete Ladungsstabilisatoren in Tonern sind einerseits z.B. Nigrosinfarbstoffe, quaternäre Ammoniumverbindungen, Triaminophenylmethanverbindungen oder Imidazolverbindungen. Sie sind zur Erzeugung positiver Ladungen geeignet. Metallkomplex-Azofarbstoffe, Metallkomplexe von Salicylsäure und Alkylsalicylat-Metallkomplexe, z.B. das Zinksalz der Di-tert.butylsalicylsäure, führen andererseits zu einem Elektronenüberschuß auf der Toneroberfläche und damit zu einer negativen elektrostatischen Aufladung.

Geeignete Ladungskontrollmittel g2) sind beispielsweise Nigrosine (z.B. Bontron® N und P-Marken der Fa. Orient Chemicals, Japan und Copy® Blue PR der Fa. Hoechst) für positiv aufladbare Toner und die im Color Index als Solvent dyes bezeichneten Metallkomplexazofarbstoffe (z.B. Bontron® S-Marken der Fa. Orient Chemicals Japan und Aizen® Spilon Black TRH der Fa. Hodogaya Chemicals Co.Ltd., Japan).

Zusätzlich sind als externe Additive in Tonern Feinstpulver von Magnetit, leitfähiges Titandioxid, Zinnoxid, Ceroxid, Antimonoxid und Hydrotalk bekannt.

Zur Herstellung eines Entwicklers für die Elektrophotographie können die erfindungsgemäßen Toner zusätzlich 0,1 bis 99 Gew.-%, bevorzugt 0,1 bis 40 Gew.-% mindestens eines Magnetpigments h) enthalten. Geeignete Magnetpigmente h) sind dem Fachmann bekannt und z.B. in der US-A-4,803,143 beschrieben. Im allgemeinen handelt es sich um ferromagnetische Materialien, bevorzugt Eisenpulver, und ferrimagnetische Materialien, wie z.B. Fe₃O₄ und insbesonder γ-Fe₂O₃, mit Teilchengrößen von etwa 5 bis 100 µm, die ggf. in hochdisperser Form in einem geeigneten Bindemittel formuliert werden.

Verfahren zur Herstellung von Tonerformulierungen sind dem Fachmann bekannt. Im allgemeinen wird eine Mischung der Inhaltsstoffe homogen aufgeschmolzen und mittels eines Kneters oder eines Extruders durchmischt. Nach dem Abkühlen wird das Knetgut in einem üblichen Mahlaggregat auf die gewünschte Teilchengröße gemahlen. Als Mahlaggregate sind Fließbettgegenstrahlmühlen bevorzugt, in denen das Mahlgut durch den Zusammenprall der Teilchen untereinander auf die erforderliche Teilchengrößenverteilung zerkleinert wird.

Die erfindungsgemäßen Toner können als Einkomponentensystem oder als Zweikomponentensystem formuliert werden. Im folgenden werden typische Zusammensetzungen für Einkomponenten- und Zweikomponentensysteme angegeben (die %-Angaben beziehen sich im folgenden auf das Gewicht):

### (I) Zusammensetzung der Einkomponenten-Toner

- 30 bis 70 %: mindestens eines Styrol/Acrylat- oder Styrol/Methacrylat-Harzes a)
- 1 bis 10 %: mindestens eines zumindest teilweise taktischen Polypropylenwachses b)
- 1 bis 10 %: eines Färbemittels c)
- 0,1 bis 5 %: eines Fließfähigkeitsverbessers f)
- 20 bis 50 %: eines Magnetpigments h)
- 0,1 bis 5 %: Ladungssteuerstoff (z.B. Bontron® S 34)

Diese Toner können in modernen Laserdruckern ohne Zusatz magnetischer Trägerteilchen, die üblicherweise als zweite Komponente benutzt werden (siehe Zweikomponentensystem), zur Entwicklung der elektrostatischen Ladungsbildner herangezogen werden.

### (II) Zusammensetzung der Zweikomponenten-Toner

- 70 bis 95 %: mindestens eins Styrol/Acrylat- oder Styrol/Methacrylat-Harzes
- 1 bis 10 %: mindestens eines zumindest teilweise taktischen Polypropylenwachses b)
- 1 bis 10 %: eines Färbemittels c)
- 0,1 bis 5 %: eines Fließfähigkeitsverbesserers f)
- 0,1 bis 5 %: eines Ladungsstabilisators g1) oder Ladungskontrollmittels g2)

Diese nicht magnetischen Zweikomponenten-Toner werden üblicherweise mit Hilfe magnetischer Trägerteilchen - in einem dem Fachmann als "Magnetbürstenentwicklung" bekannten Verfahren - gleichmäßig dem elektrostatischen Bildträger zugeführt und übertragen. Der Prozeß ist z.B. in der US-A-5,496,674 ausführlich beschrieben.

Gegenstand der Erfindung ist auch die Verwendung von zumindest teilweise taktischen Polyalkylenwachsen b) als Inhaltsstoffe in Tonern der obenbeschriebenen Art.

Die Erfindung wird anhand der folgenden, nicht einschränkenden Beispiele erläutert.

### BEISPIELE

Die kinematische Viskosität v wurde an Polymerschmelzen mit einem Platte-Kegel-Viskosimeter gemessen, wie es z.B. in Ullmann's Enzyklopädie der technischen Chemie, Bd. 2/1, 3. Aufl., 1961, S.785, beschrieben ist.

Die Molekulargewichtsbestimmung erfolgte durch Gelpermeationschromatographie.

Die Kugeldruckhärte wurde nach Höppler mittels der Standardmethode DGF M- III 9a (Deutsche Gesellschaft für Fettwissenschaften e.V., Münster) bestimmt. Dabei wird der Druck bestimmt, bei dem eine definiert gerundete Nadel in einen Probenkörper des Polymers eindringt. Angegeben wird der Druck, der benötigt wird, um eine bestimmte Eindringtiefe zu erreichen.

Tabelle 1 gibt die physikalischen Daten eines in den erfindungsgemäßen Tonern enthaltenen isotaktischen Polypropylens sowie eines Polypropylenwachses aus dem Stand der Technik wieder (VISCOL 550P® der Fa. Sanyo Chemicals, Japan), welches als Vergleichssubstanz dient.

**Tabelle 1**

| | | VISCOL 550P® | Isotaktisches Polypropylen |
|---|---|---|---|
| Schmelzpunkt | | 147 | 149 |
| Viskosität | 180°C | 142 mm²/sek | 136 mm²/sek |
| | 200°C | 100 mm²/sek | 98 mm²/sek |
| Molekulargewicht Mn | | 7718 | 7985 |
| Molekulargewicht Mw | | 17239 | 17956 |
| Kugeldruckhärte | | 610 bar | 1370 bar |

Wie die Tabelle 1 zeigt, weisen die erfindungsgemäßen isotaktischen Polypropylenwachse bei ansonsten vergleichbaren physikalischen Eigenschaften eine gegenüber den bekannten Wachsen deutlich erhöhte Kugeldruckhärte auf.

### Versuch 1 (erfindungsgemäß)

123,5 g eines Copolymeren aus 80 % Styrol und 20 % Butylmethacrylat wurden in einem Janke und Kunkel Laborkneter (JK Duplex Kneter MKD-06) gegeben, der zuvor auf 140°C aufgeheizt wurde und homogen aufgeschmolzen. Dann wurden 6,5 g des isotaktischen Polypropylenwachses nach Tabelle 1 zugegeben. Nachdem ein homogener Knetgummi entstanden war, wurde der Außenmantel des Kneters auf 80°C abgekühlt und bei dieser Temperatur 1,5 Stunden weiter homogenisiert. Das Knetgut wurde danach entnommen und abgekühlt.

Die abgekühlte Masse wurde in einer Analysenmühle 30 Sekunden gemahlen und danach einer Siebanalyse unterworfen.

### Vergleichsversuch

123,5 g eines Copolymeren aus 80 % Styrol und 20 % Butylmethacrylat wurden in einem Janke und Kunkel Laborkneter (JK Duplex Kneter MKD-06) gegeben, der zuvor auf 140°C aufgeheizt wurde und homogen aufgeschmolzen. Dann wurden 6,5 g VISCOL® 550P handelsübliches Polypropylenwachs der Fa. Sanyo Chemicals, Japan) zugegeben. Nachdem ein homogener Knetgummi entstanden war, wurde der Außenmantel des Kneters auf 80°C abgekühlt und bei dieser Temperatur 1,5 Stunden weiter homogenisiert. Das Knetgut wurde danach entnommen und abgekühlt.

Die abgekühlte Masse wurde in einer Analysenmühle für 30 Sekunden gemahlen und danach einer Siebanalyse unterworfen.

**Tabelle 2**

| Siebanalyse nach 30 Sekunden Mahldauer | | |
|---|---|---|
| Maschenweite des Siebes (µm) | Mischung aus Versuch 1 | Mischung aus Vergleichsversuch |
| 160 | 36,1 g | 39,0 g |
| 125 | 3,8 g | 5,9 g |
| 100 | 1,9 g | 2,9 g |
| 90 | 0,9 g | 0,9 g |
| 71 | 0,8 g | 0,7 g |
| 50 | 3,3 g | 2,1 g |
| 36 | 0,5 g | 0,2 g |
| 20 | 0,0 g | 0,0 g |
| | | |
| <71 µm | 7,56 | 4,60 |

Wie Tabelle 2 eindeutig belegt, wird die Mahlbarkeit einer Polymermischung für Tonerformulierungen durch die Verwendung eines taktischen Polyalkylenwachses verbessert. Die Siebanalyse zeigt, daß bei gleicher Mahldauer die das taktische Polypropylenwachs enthaltende Tonerformulierung eine wesentlich größere Polymermenge mit einer Teilchengröße von 71 µm und darunter enthält.

### Versuch 2

In einer Analysenmühle wurden 20 g isotaktisches Polypropylen bzw. 20 g Viscol 550® über 1 min gemahlen. Von den vorgemahlenen Wachstypen wurden jeweils 5 g isotaktisches Polypropylen und Viscol® 550P in einer Fließbett Gegenstrahlmühle (Typ Forschung, Fa. A. Bauermann & Co. Verfahrenstechnik, Engelsberg 42, Solingen, Deutschland) bei einem Mahldruck von 1, 2, 3 und 4 bar gemahlen und anschliessend die Partikelgrößenverteilung bestimmt.

**Tabelle 3**

| Mittlere Partikelgröße d50 als Funktion des Mahldrucks | | |
|---|---|---|
| | Isotaktisches Polypropylen Partikelgröße [µm] | Viscol® 550P Partikelgröße [µm] |
| Vormahlung Analysenmühle | 65 | 69 |
| Mahldruck 1 bar | 52 | 60 |
| Mahldruck 2 bar | 35 | 57 |
| Mahldruck 3 bar | 25 | 45 |
| Mahldruck 4 bar | 22 | 44 |

Die nach dem Mahlvorgang resultierende mittlere Partikelgröße d50 ist, wie Tabelle 3 zeigt, für das erfindungsgemäße taktische Polypropylen immer geringer als für das bekannte Vergleichspolymer. Dieser Effekt nimmt mit höheren Mahldrücken zu, so daß die taktischen Polyalkylenverbindungen vorteilhafterweise den ökonomischen Einsatz von leistungsfähigen Mahlaggregaten mit hohen Durchsatzraten ermöglichen.

## Patentansprüche

1. Toner für die Entwicklung elektrostatischer Bilder, enthaltend
a) 10 bis 95 Gew.-% mindestens eines Binderharzes
b) 0,01 bis 40 Gew.-% wenigstens eines zumindest teilweise taktischen Polyalkylenwachses mit einem Zahlenmittel des Molekulargewichts von 2000 bis 12000 und einer Kugeldruckhärte von mindestens 800 bar, und
c) 0,1 bis 10 Gew.-% eines Färbemittels,
sowie gegebenenfalls weitere Inhaltsstoffe.

2. Toner nach Anspruch 1, wobei es sich bei dem Polyalkylenwachs um ein Polypropylenwachs handelt.

3. Toner nach einem der Ansprüche 1 oder 2, wobei es sich bei dem Polyalkylenwachs um zumindest teilweise isotaktisches Polypropylen handelt.

4. Toner nach einem der Ansprüche 1 oder 2, wobei es sich bei dem Polyalkylenwachs um zumindest teilweise syndiotaktisches Polypropylen handelt.

5. Toner nach einem der Ansprüche 1 bis 4, wobei die Kugeldruckhärte des Polypropylenwachses mindestens 1000 bar ist.

6. Toner nach einem der Ansprüche 1 bis 5, der das Polyalkylenwachs b) in einer Menge von 0,1 bis 20 Gew.-%, bevorzugt 0,5 bis 15 Gew.-%, insbesondere 1 bis 10 Gew.-% enthält.

7. Toner nach einem der Ansprüche 1 bis 6, der als Binderharz mindestens ein Styrol-, Acrylat- und/oder Methacrylat-Homopolymer oder ein Styrol-Copolymer mit mindestens einem Comonomer, ausgewählt unter ethylenisch ungesättigten Monoolefinen, Vinylhalogeniden, Vinylestern, Estern der Acryl- oder Methacrylsäure, ethylenisch ungesättigten Nitrilen, Vinylethern, Vinylketonen und N-Vinyl-Verbindungen, oder der eine Harzmischung aus einem Styrolharz und mindestens einem weiteren Polymerharz enthält.

8. Toner nach einem der Ansprüche 1 bis 7, der zusätzlich mindestens ein Paraffinwachs d) enthält.

9. Toner nach einem der Ansprüche 1 bis 8, der zusätzlich mindestens ein Fettsäuremetallsalz e) in einer Menge von 0,1 bis 10 Gew.-%, bezogen auf das Gewicht der Binderharzkomponente a) enthält.

10. Toner nach einem der Ansprüche 1 bis 9, der zusätzlich einen oder mehrere weitere Inhaltsstoffe enthält, die ausgewählt sind unter
f) 0,1 bis 10 Gew.-% mindestens eines Fließfähigkeitsverbesserers,
g) 0,1 bis 5 Gew.-% mindestens eines Ladungsstabilisators g1) oder Ladungskontrollmittels g2),
h) 0,1 bis 250 Gew.-% mindestens eines Magnetpigments.

11. Toner nach einem der Ansprüche 1 bis 10 in Form eines Einkomponentensystems, enthaltend
a) 30 bis 70 Gew.-% mindestens eines Styrol/Acrylat- oder Styrol/Methacrylat-Harzes,
b) 1 bis 10 Gew.-% mindestens eines zumindest teilweise taktischen Polypropylenwachses,
c) 1 bis 10 Gew.-% eines Färbemittels,
f) 0,1 bis 5 Gew.-% eines Fließfähigkeitsverbesserers,
h) 20 bis 50 Gew.-% eines Magnetpigments
sowie 0,1 bis 5 Gew.-% CCA (Ladungskontrollmittel).

12. Toner nach einem der Ansprüche 1 bis 10 in Form eines Zweikomponentensystems, enthaltend
a) 70 bis 95 Gew.-% mindestens eines Styrol/Acrylat- oder Styrol/Methacrylat-Harzes,
b) 1 bis 10 Gew.-% mindestens eines zumindest teilweise taktischen Polypropylenwachses,
c) 1 bis 10 Gew.-% eines Färbemittels,
f) 0,1 bis 5 Gew.-% eines Fließfähigkeitsverbesserers,
g) 0,1 bis 5 Gew.-% mindestens eines Ladungsstabilisators g1) oder Ladungskontrollmittels g2).

13. Verwendung von Polyalkylenwachsen, wie in einem der Ansprüche 1 bis 5 definiert, in Tonern nach einem der Ansprüche 1 bis 12.
